(19) Europäisches Patentamt
European Patent Office
Office européen des brevets

(11) **EP 2 401 825 B1**

(12) **EUROPEAN PATENT SPECIFICATION**

(45) Date of publication and mention
of the grant of the patent:
**04.12.2013 Bulletin 2013/49**

(51) Int Cl.:
***H04B 13/02*** *(2006.01)* ***H04B 10/90*** *(2013.01)*

(21) Application number: **10708034.3**

(22) Date of filing: **26.02.2010**

(86) International application number:
**PCT/US2010/025483**

(87) International publication number:
**WO 2010/099371 (02.09.2010 Gazette 2010/35)**

(54) **SUBMERSIBLE VESSEL DATA COMMUNICATIONS SYSTEM**

DATENKOMMUNIKATIONSSYSTEM FÜR UNTERSEEBOOTE

SYSTÈME DE COMMUNICATION DE DONNÉES POUR NAVIRE SUBMERSIBLE

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **26.02.2009 US 155768 P**

(43) Date of publication of application:
**04.01.2012 Bulletin 2012/01**

(73) Proprietor: **Battelle Memorial Institute
Columbus, OH 43201-2696 (US)**

(72) Inventors:
• **RIDGWAY, Richard, W.**
**Columbus**
**OH 43201-2696 (US)**
• **NIPPA, David, W.**
**Columbus**
**OH 43201-2696 (US)**
• **YEN, Stephen**
**Columbus**
**OH 43201-2696 (US)**

• **BARNUM, Thomas, J.**
**Columbus**
**OH 43201-2696 (US)**

(74) Representative: **Lawrence, Richard Anthony et al
Keltie LLP
Fleet Place House
2 Fleet Place
London EC4M 7ET (GB)**

(56) References cited:
**US-A- 5 377 165**

• **MIYAUCHI K.: "W-40G Guided Millimeter-Wave
Transmission System" MICROWAVE
SYMPOSIUM DIGEST MTT-S INTERNATIONAL,
vol. 75, no. 1, May 1975 (1975-05), pages 208-211,
XP002580411**
• **JABLONSKI D.: "Attenuation Characteristics of
Circular Dielectric Waveguide at Millimeter
Wavelengths" IEEE TRANSACTIONS ON
MICROWAVE AND TECHNIQUES, vol. MTT-26,
September 1978 (1978-09), pages 667-671,
XP002580412**

## Description

The present invention relates to data communication and, more specifically, to components for facilitating data communication in applications where communication by conventional means are less than satisfactory.

For example, and not by way of limitation, in the context of underwater vehicles, like a submarine and an unmanned scout, the unmanned scout can be used collect information for transmission back to the submarine. The transmission is most effective if it supports relatively high data rates. Optical based technologies have achieved data rates in excess of 1 Gb/s but would require precisely aligned optical connectors wilh reasonably clean interfaces. An example of an optical system can be found in US 5377165. The present inventors have recognized that millimeter-wave communication systems employing for example, a millimeter wave (MMW) generator/modulator of the type described in published US Patent App. No. US 2008/0199124 A1, with carrier frequencies between 35 GHz and 140 GHz, can support data rates in excess of 10 Gb/s and, although millimeter-waves in general are strongly attenuated when propagating through water, a millimeter-wave signal can propagate a few millimeters through water and can be used to provide a high data rate link without requiring intimate contact, clear water, a clean window, or precise alignment.

More specifically, the present inventors have explored the propagation of millimeter-waves through thin layers of sea water in the context of bio-fouled connector surfaces and connector materials of MMW data couplings and have concluded that a 35 GHz carrier, the attenuation of which is about 16.5 dB/mm in water, can support data rates up to about 5 Gb/s with relatively simple on-off keying modulation schemes and higher data rates with spectrally efficient modulation schemes such as, for example, quadrature amplitude modulation. Similarly, a 94 GHz carrier, the attenuation of which is about 35.1 dB/mm in water, can support data rates of 10 Gb/s with on-off key modulation. The present disclosure relies on photonic approaches for generating, modulating, and detecting millimeter waves, as presented in US Patent App. Nos. US 2008/0199124 A1, US 2009/0016729 A1, US 2008/0023632, and other similar publications, in the construction  of data communications systems configured for reliable data transfer through water and other environments where the ambient would otherwise interfere with efficient data transfer.

In accordance with one embodiment of the present invention, a data communications system is provided comprising a submersible home vessel, a submersible satellite vessel, and a flexible dielectric waveguide cable. The flexible dielectric waveguide cable comprises an exposed dielectric face configured to transmit electromagnetic millimeter wave radiation. The submersible home vessel comprises a transparent pressure boundary that is configured to be functionally transparent to electromagnetic millimeter wave radiation and to permit unguided propagation of the electromagnetic millimeter wave radiation. The submersible home vessel further comprises a coupling portion that is configured to secure the dielectric face in a position that enables the transmission of unguided millimeter wave radiation across the transparent pressure boundary to a MMW detector within the submersible home vessel.

In accordance with another embodiment of the present invention, a submersible vessel comprising a hull, a transparent pressure boundary, a connector coupling portion, and a MMW detector is contemplated. Additional embodiments are disclosed and contemplated.

The following detailed description of specific embodiments of the present disclosure can be best understood when read in conjunction with the following drawings, where like structure is indicated with like reference numerals and in which:

Fig. 1 is a schematic illustration of a data communications system according to one embodiment of the present disclosure;

Fig. 2 is a more detailed illustration of particular components of the data communications system illustrated in Fig. 1; and

Figs. 3 and 4 are detailed illustrations of complementary wet-mate connectors that can be utilized in a data communications system according to the present disclosure.

Figs. 5 and 6 are schematic illustrations of some of the contemplated alternatives to the data communications system illustrated in Fig. 1.

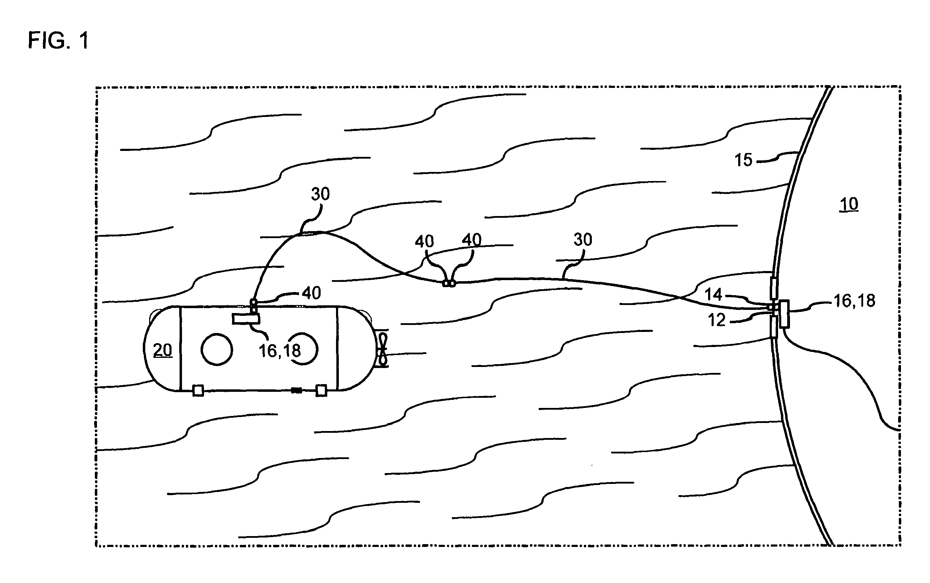

A data communications system according to one embodiment of the present disclosure is illustrated schematically in Fig. 1. Generally, the system comprises a submersible home vessel 10, e.g., a military or research class submarine, a submersible satellite vessel 20, and a flexible dielectric waveguide cable 30. For the purposes of describing and defining the present invention, it is noted that a "flexible" dielectric cable is characterized by a degree of flexibility that is sufficient to permit the cable to bend, flex, or otherwise assume a serpentine, non-linear, unbroken configuration under its own weight, as the two ends of the cable move relative to one another.

The flexible dielectric waveguide cable 30 comprises one or more exposed dielectric faces that are described in further detail below and are generally configured to transmit electromagnetic millimeter wave radiation originating from the submersible home vessel 10 or the submersible satellite vessel 20. The submersible home vessel 10 illustrated in Fig. 1 comprises a transparent pressure boundary 12 that is configured to be functionally transparent to electromagnetic millimeter wave radiation and to permit unguided propagation of the electromagnetic millimeter wave radiation. The unguided MMW signal is captured by core and cladding portions of the exposed dielectric faces of the flexible dielectric waveguide cable 30. Since the signal through the transparent pressure boundary 12 is not guided, it will diverge and the size of the propagating mode will grow. Accordingly, it will often be preferable to ensure that the millimeter wave source that launches a signal on the transmit side in the submersible home vessel 10 or the submersible satellite vessel 20 will define a mode cross section that is smaller than the waveguide cross section defined by the flexible dielectric waveguide cable 30. By making the cross sectional dimension of the dielectric waveguide similar to the mode of the diverging MMW signal, the dielectric waveguide 30 will efficiently capture the signal and then propagate it in a guided mode. At the receiving end, the MMW signal starts from the dielectric waveguide 30 and diverges to a larger diameter. A MMW antenna, MMW feed, or other type of MMW detector configuration then captures the diverging MMW signal after it propagates through the transparent boundary.

The submersible home vessel 10 further comprises a connector coupling portion 14 that is configured to secure an exposed dielectric face of the cable 30 in a position that enables the transmission of unguided millimeter wave radiation across the functionally transparent pressure boundary 12 to a MMW detector 16 within the submersible home vessel. The submersible satellite vessel 20 may also comprise a transparent pressure boundary, connector coupling portion, and MMW detector.

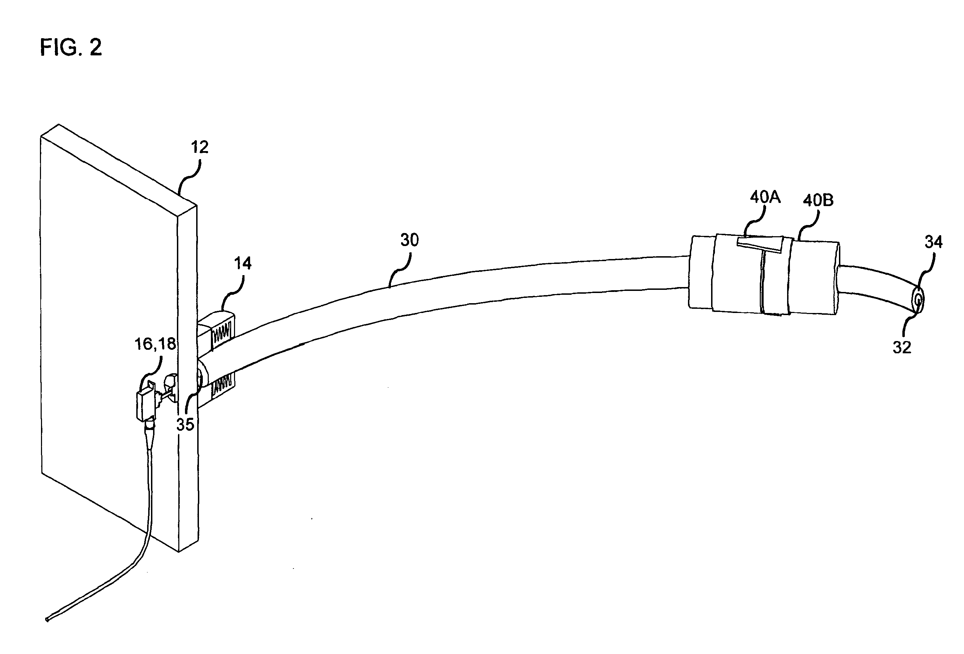

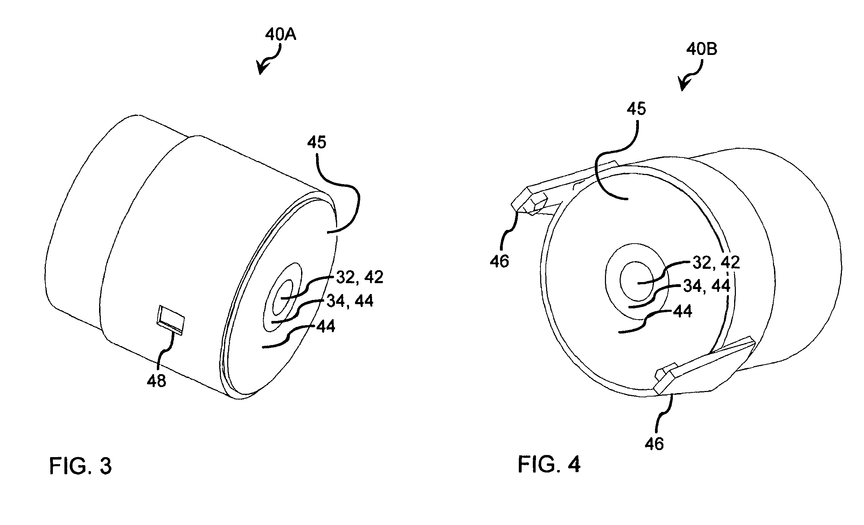

In the embodiment illustrated in Fig. 1, the data communications system comprises a plurality of flexible dielectric waveguide cables 30, each of which comprises one or more exposed dielectric faces. In Fig. 1, the exposed dielectric face is presented in the form of an exposed dielectric face of an exposed MMW connector 40 and is illustrated in further detail below with respect to Figs. 3 and 4. In Fig. 2, the exposed dielectric face is presented in the form of an exposed dielectric cable face 35. In either case, one of the flexible dielectric waveguide cables 30 comprises a pair of exposed dielectric faces, each at an opposite end of the flexible dielectric waveguide cable 30.

For the purposes of describing and defining the present invention, it is noted that an "exposed" dielectric face is exposed to the ambient prior to coupling with a MMW receiving element, such as a complementary MMW connector or a transparent pressure boundary. It is contemplated that the degree or duration of exposure may vary from a relatively brief, partial exposure to a relatively extended, full exposure. In any case, the exposure will be sufficient for elements in the ambient, e.g., water, sea water, bio-contaminants, etc., to reach the dielectric face prior to coupling with the MMW receiving element.

In Fig. 2, one of the pair of exposed dielectric faces is secured by the connector coupling portion 14 of the submersible home vessel 10 so that it is in MMW communication with the MMW detector 16 via the transparent pressure boundary 12. It is contemplated that connector coupling portions 14 according to the present disclosure can be configured to secure an end portion of a flexible dielectric waveguide cable 30 into direct or indirect MMW communication with the transparent pressure boundary 12. The connector coupling portion 14, which is merely illustrated schematically in Fig. 1 can alternatively be configured to secure an exposed MMW connector assembly of the type illustrated in Figs. 3 and 4 into direct or indirect MMW communication with the transparent pressure boundary 12. In either case, the connector coupling portion can be mechanically coupled to the transparent pressure boundary 12, mounted to the transparent pressure boundary 12, or formed integrally with the transparent pressure boundary 12.

As is illustrated schematically in Figs. 1 and 2, the submersible home vessel 10 comprises a hull 15 and the transparent pressure boundary defines a portion of the submersible home vessel 10 that is structurally distinct from the hull 15. The boundary itself should be a dielectric material and can be selected, for example, from PTFE, polystyrene, polyethylene, alumina, lithium niobate, silicon, and combinations thereof. For the purposes of describing and defining the present invention, it is noted that a "pressure boundary" of a submersible vessel is a structural member of the vessel that is capable of defining a pressure boundary between the interior of the vessel and the ambient in which the vessel is submerged. Further, a "functionally" transparent pressure boundary will be sufficiently transparent to enable transmission and corresponding detection of MMW radiation through the boundary with no more than 10 dB signal attenuation.

Fig. 2 presents a detailed illustration of one suitable manner for configuring the connector coupling portion 14. In the illustrated embodiment, the connector coupling portion 14 comprises a threaded mechanical coupling that is configured to secure an end portion of the flexible dielectric waveguide cable 30 in position, e.g., in much the same manner as a ferrule assembly. It is also contemplated that the connector coupling portion 14 can be configured for magnetic securement or any other type of mechanical or nonmechanical securement and may cooperate with portions of an associated exposed MMW connector in these respects.

As is illustrated in Figs. 2-4, complementary exposed MMW connectors 40A, 40B may be provided such that they comprise complementary mating portions in the form of, for example, flexible latches 46 and latch receiving slots 48, that permit the flexible dielectric waveguide cables 30 to be connected to each other in series to define a MMW transmission path extending along the flexible dielectric waveguide cables 30 between the submersible home vessel 10 and the submersible satellite vessel 20.

As is illustrated in Figs. 2-4, the exposed MMW connectors 40A, 40B each comprise a exposed dielectric connector face 45 and the flexible latches 46 and latch receiving slots 48 are configured for secure, releasable abutment of the dielectric faces 45. Typically, the aforementioned abutment of the dielectric faces 45 permits an average interfacial spacing of less than approximately 1 mm. The structure of the exposed MMW connectors 40A, 40B and the nature in which the electromagnetic millimeter wave radiation is transmitted allows for relaxed engagement tolerances as compared to conventional optical transmission, e.g., on the order of not less than approximately 0.1 mm.

Electromagnetic waves in the millimeter wave region can be conveyed through dielectric transmission lines. Such transmission lines utilize dielectric materials either partially or entirely as the medium for conveying the electromagnetic waves. The flexible dielectric waveguide cable 30 illustrated in Fig. 2 comprises a cable core 32 that is characterized by a relatively high permittivity (e.g., permittivity $\varepsilon$ above about 4) and a cable cladding 34 that is characterized by a relatively low permittivity (e.g., permittivity, $\varepsilon$ below about 3). In this manner, electromagnetic millimeter wave radiation propagating along the cable 30 can be confined in the flexible dielectric waveguide cable 30. For the purposes of describing and defining the present invention, it is noted that electromagnetic radiation that is "confined" in a flexible dielectric waveguide cable or a cable connector, is "confined" in the sense that a majority of the signal will propagate along the axial direction of the cable or connector, as opposed to being permitted to expand beyond the periphery of the cable or connector. For example, in the context of electromagnetic millimeter wave radiation propagating in a flexible dielectric waveguide cable, the aforementioned core and cladding combination serves to confine the millimeter-wave to the cable and control its direction of propagation along the axis of the cable.

The conditions for single-mode waveguide operation of a flexible dielectric waveguide cable according to the present disclosure can be represented as follows for a given core diameter:

$$D = \frac{c_o V_c}{f\pi\sqrt{\varepsilon_{core} - \varepsilon_{clad}}}$$

where $c_o$ is the speed of light in a vacuum, $V_c$ (2.405) is the unit-less single-mode waveguide cutoff parameter (e.g., Vc=2.405), $f$ is the frequency of operation, and $\varepsilon_{core}$ and $\varepsilon_{clad}$ are the core and cladding relative permittivities, respectively. For example, a dielectric waveguide with a core permittivity of 4 is single-mode for core a diameter of 1.5 mm within W-band operating frequencies (75 GHz to 110 GHz). Beam propagation modeling reveals that the MMW field of flexible dielectric waveguide cables according to the present disclosure will extends to a diameter of about 8 mm. Therefore, a single dielectric cable could be formed with multiple cores spaced at a pitch of 8 mm.

Referring to Figs. 3 and 4, the complementary exposed MMW connectors 40A, 40B illustrated therein each comprise a connector core 42 that is contiguous with the cable core 32 and is characterized by a relatively high permittivity. The complementary exposed MMW connectors 40A, 40B further comprise a connector cladding 44 that is characterized by a relatively low permittivity. In this manner, electromagnetic millimeter wave radiation propagating from the cable 30 to the connector 40A, 40B is confined in the connector. As is illustrated in Figs. 2-4, the connector cladding 44 defines transverse dimensions that are expanded relative to corresponding transverse dimensions of the cable cladding 34 such that the expanded cladding portion of the connector cladding 44 defines a majority of the surface area of the dielectric face 45. Although the exposed dielectric connector faces 45 illustrated in Figs. 3 and 4 are substantially planar it is contemplated that complementary exposed MMW connectors may also comprise non-planar or keyed dielectric faces that would also be complementary. In most cases, to enable effective use and manipulation of the connectors 40A, 40B, the exposed MMW connectors 40A, 40B will be constructed to exhibit an axial rigidity that is at least one order of magnitude greater than that of the flexible dielectric waveguide cable 30.

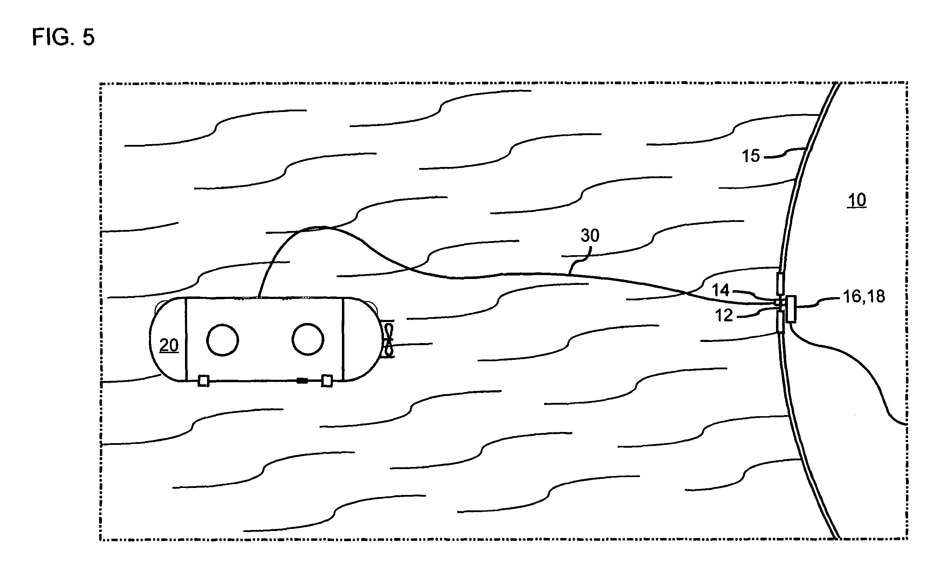

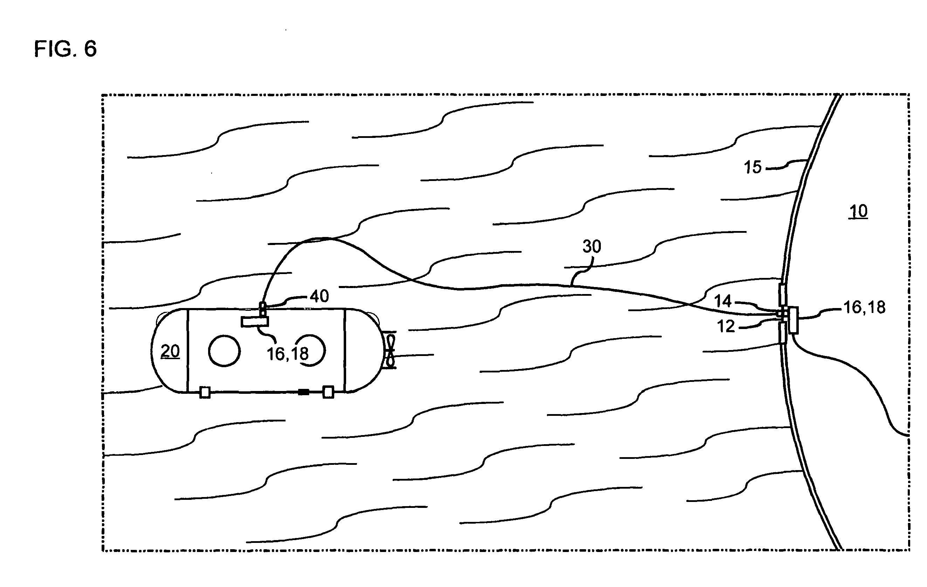

It is also contemplated that a variety of alternative cable configurations can be practiced within the spirit of the present disclosure including, but not limited to, the configurations illustrated in Figs. 5 and 6. For example, referring to Fig. 5, it is contemplated that a flexible dielectric waveguide cable 30 can extend directly from the submersible satellite vessel 20 to an exposed MMW connector 40 where millimeter wave radiation is transmitted across the transparent pressure boundary 12 to the MMW detector 16. Alternatively, as is illustrated in Fig. 6, the flexible dielectric waveguide cable 30 may comprise a pair of exposed MMW connectors 40, each at an opposite end of the flexible dielectric waveguide cable 30. In which case, the submersible satellite vessel 20 could comprise an additional transparent pressure boundary configured to be functionally transparent to electromagnetic millimeter wave radiation and to permit unguided propagation of the electromagnetic millimeter wave radiation. In addition, referring to Fig. 6, the submersible satellite vessel 20 may further comprises an additional connector coupling portion configured to secure the exposed MMW connector 40 in a position that enables the transmission of unguided millimeter wave radiation across the additional transparent pressure boundary to a MMW detector 16 on board the submersible satellite vessel 20.

Turning to the construction of the flexible dielectric waveguide cable 30, it is contemplated that the cable core 32 may comprise ceramic particles dispersed in a dielectric matrix. For example, the dielectric matrix may comprise a relatively low permittivity material selected from PTFE, polystyrene, polyethylene, and combinations thereof. The ceramic particles may comprise a relatively high permittivity material selected from alumina, lithium niobate, silicon, and combinations thereof. In practice, the ceramic particles occupy between approximately 5 wt% and approximately 20 wt% of the cable core and are preferably characterized by an average maximum dimension that is less than approximately 10% of the wavelength of the electromagnetic millimeter wave radiation. For example, when the electromagnetic millimeter wave radiation comprises a 300 GHz signal characterized by a wavelength of 1 mm, the ceramic particles preferably exhibit an average maximum dimension of less than 100 $\mu$. Similarly, for a 94 GHz signal characterized by a wavelength of 3.3 mm, the ceramic particles preferably exhibit an average maximum dimension of less than 330 $\mu$m

More specifically, in one embodiment, the cable core 32 is constructed by dispersing 18 wt% alumina ($\varepsilon$=9.8) in a PTFE matrix ($\varepsilon$=2.1) to achieve a resulting core permittivity of approximately 3.5. The core diameter is approximately 2 mm and the cladding is 100% PTFE defining a diameter of about 10 mm. In practicing the concepts of the present disclosure, it is noted that respective components of the core and cladding can be controlled to vary the resulting core and cladding dimensions and permittivity.

For the purposes of describing and defining the present invention, it is noted that reference herein to a "millimeter" wave is intended to encompass electromagnetic radiation in the highest radio frequency band, i.e., from about 30 to about 300 gigahertz, also referred to as terahertz radiation. This band has a wavelength of ten to one millimeter, giving it the name millimeter band or millimeter wave, sometimes abbreviated MMW or mmW.

The MMW detector 16 is illustrated schematically in Figs. 1 and 2 and may comprise any of a number of suitable detectors responsive to electromagnetic millimeter wave radiation. For example, the MMW detector may be constructed by positioning a millimeter-wave preamplifier downstream of a MMW antenna and by positioning a Schottky-diode-based millimeter-wave detector downstream of the preamplifier. Signal processing can be enabled by providing a clock and data recovery circuit.

For the purposes of describing and defining the present invention, it is noted that reference herein to a variable being a "function" of a parameter or another variable is not intended to denote that the variable is exclusively a function of the listed parameter or variable. Rather, reference herein to a variable that is a "function" of a listed parameter is intended to be open ended such that the variable may be a function of a single parameter or a plurality of parameters.

It is also noted that recitations herein of "at least one" component, element, etc., should not be used to create an inference that the alternative use of the articles "a" or "an" should be limited to a single component, element, etc.

It is noted that recitations herein of a component of the present disclosure being "configured" in a particular way, to embody a particular property, or to function in a particular manner, are structural recitations, as opposed to recitations of intended use. More specifically, the references herein to the manner in which a component is "configured" denotes an existing physical condition of the component and, as such, is to be taken as a definite recitation of the structural characteristics of the component.

It is noted that terms like "preferably," "commonly," and "typically," when utilized herein, are not utilized to limit the scope of the claimed invention or to imply that certain features are critical, essential, or even important to the structure or function of the claimed invention. Rather, these terms are merely intended to identify particular aspects of an embodiment of the present disclosure or to emphasize alternative or additional features that may or may not be utilized in a particular embodiment of the present disclosure.

For the purposes of describing and defining the present invention it is noted that the terms "substantially" and "approximately" are utilized herein to represent the inherent degree of uncertainty that may be attributed to any quantitative comparison, value, measurement, or other representation. The terms "substantially" and "approximately" are also utilized herein to represent the degree by which a quantitative representation may vary from a stated reference without resulting in a change in the basic function of the subject matter at issue.

Having described the subject matter of the present disclosure in detail and by reference to specific embodiments thereof, it is noted that the various details disclosed herein should not be taken to imply that these details relate to elements that are essential components of the various embodiments described herein, even in cases where a particular element is illustrated in each of the drawings that accompany the present description. Rather, the claims appended hereto should be taken as the sole representation of the breadth of the present disclosure and the corresponding scope of the various inventions described herein. Further, it will be apparent that modifications and variations are possible without departing from the scope of the invention defined in the appended claims. More specifically, although some aspects of the present disclosure are identified herein as preferred or particularly advantageous, it is contemplated that the present disclosure is not necessarily limited to these aspects.

It is noted that one or more of the following claims utilize the term "wherein" as a transitional phrase. For the purposes of defining the present invention, it is noted that this term is introduced in the claims as an open-ended transitional phrase that is used to introduce a recitation of a series of characteristics of the structure and should be interpreted in like manner as the more commonly used open-ended preamble term "comprising."

**Claims**

1. A data communications system comprising a submersible home vessel (10), a submersible satellite vessel (20), and a flexible dielectric waveguide cable connecting the two vessels (30), wherein:

the flexible dielectric waveguide cable (30) comprises an exposed dielectric face configured to transmit electromagnetic millimeter wave radiation;
the submersible home vessel (10) comprises a transparent pressure boundary (12) that is configured to be functionally transparent to electromagnetic millimeter wave radiation and to permit unguided propagation of the electromagnetic millimeter wave radiation; and
the submersible home vessel (10) further comprises a coupling portion (14) that is configured to secure the dielectric face in a position that enables the transmission of unguided millimeter wave radiation across the transparent pressure boundary (12) to a MMW detector (16) within the submersible home vessel (10).

2. A data communications system as claimed in claim 1 wherein:

the data communications system further comprises a millimeter wave source that is configured to launch an electromagnetic millimeter wave signal on a transmit side in the submersible home vessel (10) or the submersible satellite vessel (20); and
the millimeter wave source defines a signal mode cross section that is smaller than the waveguide cross section defined by the flexible dielectric waveguide cable (30).

3. A data communications system as claimed in any preceding claim wherein the flexible dielectric waveguide cable (30) comprises an exposed MMW connector (40) comprising a dielectric face (45) configured to transmit electromagnetic millimeter wave radiation.

4. A data communications system as claimed in any preceding claim wherein the flexible dielectric waveguide cable (30) comprises a cable core (32) **characterized by** pennittivity ε above about 4 and a cable cladding (34) **characterized by** a permittivity ε below about 3 such that electromagnetic millimeter wave radiation propagating along the cable is confined in the cable.

5. A data communications system as claimed in claim 4 wherein the cable core (32) comprises a dielectric matrix and ceramic particles dispersed in the dielectric matrix.

6. A data communications system as claimed in claim 5 wherein the cable core (32) comprises between approximately 5 weight percent and approximately 20 weight percent ceramic particles **characterized by** an average maximum dimension that is less than approximately 10% of the wavelength of the electromagnetic millimeter wave radiation.

7. A data communications system as claimed in any of claims 4 to 6 wherein:

the flexible dielectric waveguide cable (30) comprises an exposed MMW connector (40);
the exposed MMW connector (40) comprises a dielectric face (45) configured to transmit electromagnetic millimeter wave radiation, a connector core (42) **characterized by** a relatively high permittivity, and a connector cladding (44) **characterized by** a relatively low permittivity such that electromagnetic millimeter wave radiation propagating from the cable to the exposed MMW connector (40) is confined in the connector; and
the connector cladding defines transverse dimensions that are expanded relative to corresponding transverse dimensions of the cable cladding such that the expanded cladding portion of the connector cladding defines a majority of the surface area of the dielectric face (45).

8. A data communications system as claimed in any preceding claim wherein:

the data communications system comprises a plurality of flexible dielectric waveguide cables (30), each of which comprises at least one exposed MMW connector (40) comprising an exposed dielectric connector face;
the exposed MMW connectors (40) comprise complementary mating portions that permit the flexible dielectric waveguide cables (30) to be connected to each other in series to define a MMW transmission path extending along the flexible dielectric waveguide cables (30) between the submersible home vessel (10) and the submersible satellite vessel (20);
the exposed MMW connectors (40) each comprise an exposed dielectric connector face; and
the complementary mating portions of the exposed MMW connectors (40) are configured for abutment of the exposed dielectric connector faces.

**9.** A data communications system as claimed in claim 8 wherein:

the flexible dielectric waveguide cables (30) comprise a cable core (32) **characterized by** a relatively high permittivity and a cable cladding (34) **characterized by** a relatively low permittivity such that electromagnetic millimeter wave radiation propagating along the cable is confined in the flexible dielectric waveguide cable (30);

the exposed MMW connectors (40) each comprise an exposed dielectric connector face, a connector core (42) **characterized by** a relatively high permittivity, and a connector cladding (44) **characterized by** a relatively low permittivity such that electromagnetic millimeter wave radiation propagating from the cable to the connector is confined in the connector; and

the connector cladding (44) defines transverse dimensions that are expanded relative to corresponding transverse dimensions of the cable cladding (34) such that the expanded cladding portion of the connector cladding (44) defines a majority of the surface area of the exposed dielectric connector face.

**10.** A data communications system as claimed in claim 8 wherein:

the exposed MMW connectors (40) each comprise an exposed dielectric connector face; and

the complementary mating portions of the exposed MMW connectors (40) comprise complementary latches (46) and receiving slots (48) configured for an engagement tolerance of not less than approximately 0.1 mm.

**11.** A data communications system as claimed in claim 8 wherein:

one of the flexible dielectric waveguide cables (30) comprises a pair of exposed dielectric faces, each at an opposite end of the flexible dielectric waveguide cable (30); and

one of the pair of exposed dielectric faces is secured by the coupling portion (14) of the submersible home vessel (10).

**12.** A data communications system as claimed in any of claims 1 to 7 wherein:

the flexible dielectric waveguide cable (30) comprises a pair of exposed dielectric faces, each at an opposite end of the flexible dielectric waveguide cable (30); and

the submersible satellite vessel (20) comprises an additional transparent pressure boundary that is configured to be functionally transparent to electromagnetic millimeter wave radiation; and

the submersible satellite vessel (20) further comprises an additional coupling portion that is configured to secure one of the exposed dielectric faces in a position that enables the transmission of unguided millimeter wave radiation across the additional transparent pressure boundary.

**13.** A data communications system as claimed in any preceding claim wherein the coupling portion (14) is mechanically coupled to the transparent pressure boundary (12), mounted to the transparent pressure boundary (12), or formed integrally with the transparent pressure boundary (12).

**14.** A data communications system as claimed in any preceding claim wherein the submersible home vessel (10) comprises a hull and the transparent pressure boundary (12) defines a portion of the submersible home vessel (10) that is structurally distinct from the hull (15).

**15.** A submersible vessel comprising a hull (15), a transparent pressure boundary (12), a coupling portion (14), and a MMW detector (16), wherein:

the transparent pressure boundary (12) defines a portion of the submersible vessel that is structurally distinct from the hull (15) and is configured to be functionally transparent to electromagnetic millimeter wave radiation;

the MMW detector (16) is positioned to detect electromagnetic millimeter wave radiation transmitted through the transparent pressure boundary (12); and the coupling portion (14) is configured to secure an exposed dielectric face of a dielectric cable in a position that enables the transmission of unguided millimeter wave radiation across the transparent pressure boundary (12) to the MMW detector (16) within the submersible vessel.

**Patentansprüche**

**1.** Datenkommunikationssystem, umfassend einen tauchfähigen Hauptbehälter (10), einen tauchfähigen Satellitbehälter (20) und ein flexibles dielektrisches Wellenleiterkabel (30), das die beiden Behälter verbindet, wobei:

das flexible dielektrische Wellenleiterkabel (30) eine freiliegende dielektrische Fläche umfasst, die für die Übertragung elektromagnetischer Millimeterwellen konfiguriert ist;

der tauchfähige Hauptbehälter (10) eine transparente, druckführende Umschließung (12) umfasst, die so konfiguriert ist, dass sie funktional durchlässig für elektromagnetische Millimeterwellen ist und die ungeführte Ausbreitung der elektromagnetischen Millimeterwellen zulässt; und

der tauchfähige Hauptbehälter (10) weiterhin einen Kupplungsteil (14) umfasst, der so konfiguriert ist, um die dielektrische Fläche in einer Position zu sichern, die die Übertragung ungeführter Millimeterwellen über die transparente druckführende Umschließung (12) an einen Millimeterwellendetektor (16) innerhalb des tauchfähigen Hauptbehälters (10) ermöglicht.

2. Datenkommunikationssystem nach Anspruch 1, wobei:

das Datenkommunikationssystem darüber hinaus eine Millimeterwellenquelle umfasst, die so konfiguriert ist, dass ein elektromagnetisches Millimeterwellensignal an einer Übertragungsseite innerhalb des tauchfähigen Hauptbehälters (10) oder des tauchfähigen Satellitbehälters (20) ausgestoßen wird; und
die Millimeterwellenquelle einen Signalmodus-Querschnitt festlegt, der kleiner ist als der vom flexiblen dielektrischen Wellenleiterkabel (30) festgelegte Querschnitt des Wellenleiters.

3. Datenkommunikationssystem nach einem der obigen Ansprüche, wobei das flexible dielektrische Wellenleiterkabel (30) einen freiliegenden MMW-Anschluss (40) umfasst, der eine dielektrische Fläche (45) umfasst, die für die Übertragung elektromagnetischer Millimeterwellen konfiguriert ist.

4. Datenkommunikationssystem nach einem der obigen Ansprüche, wobei das flexible dielektrische Wellenleiterkabel (30) eine Kabelseele (32) umfasst, **gekennzeichnet durch** eine Permittivität ε von über ungefähr 4, und eine Kabelummantelung (34), **gekennzeichnet durch** eine Permittivität ε von unter ungefähr 3, so dass eine sich entlang des Kabels ausbreitende elektromagnetische Millimeterwelle auf das Kabel beschränkt bleibt.

5. Datenkommunikationssystem nach Anspruch 4, wobei die Kabelseele (32) eine dielektrische Matrix umfasst sowie Keramikpartikel, die in der dielektrischen Matrix verteilt sind.

6. Datenkommunikationssystem nach Anspruch 5, wobei die Kabelseele (32) zwischen ca. 5 Gewichtsprozent und ca. 20 Gewichtsprozent Keramikpartikel umfasst, **gekennzeichnet durch** eine mittlere Höchstabmessung, die unter ca. 10 % der Wellenlänge der elektromagnetischen Millimeterwelle beträgt.

7. Datenkommunikationssystem nach einem der Ansprüche 4 bis 6, wobei:

das flexible dielektrische Wellenleiterkabel (30) einen freiliegenden MMW-Anschluss (40) umfasst;
der freiliegende MMW-Anschluss (40) eine dielektrische Fläche (45) umfasst, die für die Übertragung elektromagnetischer Millimeterwellen konfiguriert ist, eine Anschlussader (42), **gekennzeichnet durch** eine relativ hohe Permittivität, und eine Anschlussummantelung (44), **gekennzeichnet durch** eine relativ niedrige Permittivität, so dass eine sich vom Kabel zum freiliegenden MMW-Anschluss (40) ausbreitende elektromagnetische Millimeterwelle auf den Anschluss beschränkt ist; und
die Anschlussummantelung Querabmessungen bestimmt, die in Bezug auf entsprechende Querabmessungen der Kabelummantelung erweitert werden, so dass der erweiterte Ummantelungsabschnitt der Anschlussummantelung einen größten Teil der Fläche der freiliegenden dielektrischen Anschlussfläche (45) bestimmt.

8. Datenkommunikationssystem nach einem der obigen Ansprüche, wobei:

das Datenkommunikationssystem eine Vielzahl flexibler dielektrischer Wellenleiterkabel (30) umfasst, von denen jedes mindestens einen freiliegenden MMW-Anschluss (40) umfasst, der wiederum eine freiliegende dielektrische Anschlussfläche umfasst;
die freiliegenden MMW-Anschlüsse (40) ergänzende Verbindungsabschnitte umfassen, die es ermöglichen, die flexiblen dielektrischen Wellenleiterkabel (30) in Reihe aneinander anzuschließen, um einen MMW-Übertragungspfad zu bilden, der sich entlang der flexiblen dielektrischen Wellenleiterkabel (30) zwischen dem tauchfähigen Hauptbehälter (10) und dem tauchfähigen Satellitbehälter (20) erstreckt;
die freiliegenden MMW-Anschlüsse (40) jeweils eine freiliegende dielektrische Anschlussfläche umfassen; und
die ergänzenden Verbindungsabschnitte der freiliegenden MMW-Anschlüsse (40) als Stütze für die freiliegenden dielektrischen Anschlussflächen konfiguriert sind.

9. Datenkommunikationssystem nach Anspruch 8, wobei:

die flexiblen dielektrischen Wellenleiterkabel (30) eine Kabelseele (32) umfassen, **gekennzeichnet durch** eine relativ hohe Permittivität, und eine Kabelummantelung (34), **gekennzeichnet durch** eine relativ niedrige Permittivität, so dass eine sich entlang des Kabels ausbreitende elektromagnetische Millimeterwelle auf das flexible dielektrische Wellenleiterkabel (30) beschränkt ist;

die freiliegenden MMW-Anschlüsse (40) jeweils eine freiliegende dielektrische Anschlussfläche umfassen, eine Anschlussader (42), **gekennzeichnet durch** eine relativ hohe Permittivität, und eine Anschlussummantelung (44), **gekennzeichnet durch** eine relativ niedrige Permittivität, so dass eine sich vom Kabel zum Anschluss ausbreitende elektromagnetische Millimeterwelle auf den Anschluss beschränkt ist; und

die Anschlussummantelung (44) Querabmessungen bestimmt, die in Bezug auf entsprechende Querabmessungen der Kabelummantelung (34) erweitert werden, so dass der erweiterte Ummantelungsabschnitt der Anschlussummantelung (44) einen größten Teil der Fläche der freiliegenden dielektrischen Anschlussfläche bestimmt.

10. Datenkommunikationssystem nach Anspruch 8, wobei:

die freiliegenden MMW-Anschlüsse (40) jeweils eine freiliegende dielektrische Anschlussfläche umfassen; und

die ergänzenden Verbindungsabschnitte der freiliegenden MMW-Anschlüsse (40) ergänzende Riegel (46) und Eingangsschlitze (48) umfassen, die für eine Bindungstoleranz von nicht weniger als ca. 0,1 mm konfiguriert sind.

11. Datenkommunikationssystem nach Anspruch 8, wobei:

eines der flexiblen dielektrischen Wellenleiterkabel (30) ein Paar freiliegender dielektrischer Flächen an jedem Ende des flexiblen dielektrischen Wellenleiterkabels (30) umfasst; und

eines der Paare der freiliegenden dielektrischen Flächen durch den Kupplungsteil (14) des tauchfähigen Hauptbehälters (10) gesichert ist.

12. Datenkommunikationssystem nach einem der Ansprüche 1 bis 7, wobei:

das flexible dielektrische Wellenleiterkabel (30) ein Paar freiliegender dielektrischer Flächen an jedem Ende des flexiblen dielektrischen Wellenleiterkabels (30) umfasst; und

der tauchfähige Hauptbehälter (20) eine weitere transparente, druckführende Umschließung umfasst, die so konfiguriert ist, dass sie funktional durchlässig für elektromagnetische Millimeterwellen ist; und

der tauchfähige Hauptbehälter (20) darüber hinaus einen zusätzlichen Kupplungsteil umfasst, der so konfiguriert ist, dass eine der freiliegenden dielektrischen Flächen in einer Position gesichert wird, die die Übertragung ungeführter Millimeterwellen über die zusätzliche transparente, druckführende Umschließung ermöglicht.

13. Datenkommunikationssystem nach einem der obigen Ansprüche, wobei der Kupplungsteil (14) mechanisch an die transparente, druckführende Umschließung (12) gekoppelt ist, auf die transparente, druckführende Umschließung (12) montiert ist oder mit der transparenten, druckführenden Umschließung (12) eine Einheit bildet.

14. Datenkommunikationssystem nach einem der obigen Ansprüche, wobei der tauchfähige Hauptbehälter (10) einen Rumpf umfasst und die transparente, druckführende Umschließung (12) einen Abschnitt des tauchfähigen Hauptbehälters (10) bestimmt, der sich baulich vom Rumpf (15) unterscheidet.

15. Tauchfähiger Behälter, bestehend aus einem Rumpf (15), einer transparenten, druckführenden Umschließung (12), einem Kupplungsteil (14) und einem MMW-Detektor (16), wobei:

die transparente, druckführende Umschließung (12) einen Abschnitt des tauchfähigen Behälters bestimmt, der sich baulich von dem Rumpf (15) unterscheidet, und so konfiguriert ist, dass sie funktional durchlässig für elektromagnetische Millimeterwellen ist;

der MMW-Detektor (16) so positioniert ist, dass er die über die transparente, druckführende Umschließung (12) übertragene elektromagnetische Millimeterwelle erkennt; und der Kupplungsteil (14) für die Sicherung einer freiliegenden dielektrischen Fläche eines dielektrischen Kabels in einer Position konfiguriert ist, die die Übertragung ungeführter Millimeterwellen über die transparente, druckführende Umschließung (12) an den MMW-Detektor (16) innerhalb des tauchfähigen Behälters ermöglicht.

**Revendications**

1. Système de communications de données comprenant un vaisseau submersible d'attache (10), un vaisseau submersible satellite (20), et un câble flexible de guide d'onde diélectrique (30) raccordant les deux vaisseaux, dans lequel :

le câble flexible de guide d'onde diélectrique (30) comprend une face diélectrique exposée configurée pour émettre un rayonnement électromagnétique d'ondes millimétriques ;

le vaisseau submersible d'attache (10) comprend une enveloppe de pression transparente (12) qui est configurée pour être transparente fonctionnellement à un rayonnement électromagnétique d'ondes millimétriques et pour permettre une propagation non guidée du rayonnement électromagnétique d'ondes millimétriques ; et

le vaisseau submersible d'attache (10) comprend en outre une partie de couplage (14) qui est configurée pour assujettir la face diélectrique en une position qui permet l'émission de rayonnement non guidée d'ondes millimétriques à travers l'enveloppe de pression transparente (12) à un détecteur de MMW (16) au sein du vaisseau submersible d'attache (10).

2. Système de communications de données selon la revendication 1, dans lequel :

le système de communications de données comprend en outre une source d'ondes millimétriques qui est configurée pour lancer un signal électromagnétique d'ondes millimétriques sur un côté émission dans le vaisseau submersible d'attache (10) ou le vaisseau submersible satellite (20) ; et

la source d'ondes millimétriques définit une section en coupe de mode de signal qui est plus petite que la section en coupe de guide d'onde définie par le câble flexible de guide d'onde diélectrique (30).

3. Système de communications de données selon l'une quelconque des revendications précédentes, dans lequel le câble flexible de guide d'onde diélectrique (30) comprend un connecteur de MMW exposé (40) comprenant une face diélectrique (45) configurée pour émettre un rayonnement électromagnétique d'ondes millimétriques.

4. Système de communications de données selon l'une quelconque des revendications précédentes, dans lequel le câble flexible de guide d'onde diélectrique (30) comprend une âme de câble (32) **caractérisée par** une permittivité ε au-dessus d'environ 4 et une gaine de câble (34) **caractérisée par** une permittivité ε en dessous d'environ 3 de sorte qu'un rayonnement électromagnétique d'ondes millimétriques se propageant le long du câble est confiné dans le câble.

5. Système de communications de données selon la revendication 4, dans lequel l'âme de câble (32) comprend une matrice diélectrique et des particules de céramique dispersées dans la matrice diélectrique.

6. Système de communications de données selon la revendication 5, dans lequel l'âme de câble (32) comprend entre approximativement 5 pour cent en poids et approximativement 20 pour cent en poids de particules de céramique **caractérisé par** une dimension maximale moyenne qui est inférieure à approximativement 10 % de la longueur d'onde du rayonnement électromagnétique d'ondes millimétriques.

7. Système de communications de données selon l'une quelconque des revendications 4 à 6, dans lequel :

le câble flexible de guide d'onde diélectrique (30) comprend un connecteur de MMW exposé (40) ;

le connecteur de MMW exposé (40) comprend une face diélectrique (45) configurée pour émettre un rayonnement électromagnétique de guide d'ondes millimétriques, une âme de connecteur (42) **caractérisée par** une permittivité relativement élevée, et une gaine de connecteur (44) **caractérisée par** une permittivité relativement faible de sorte qu'un rayonnement électromagnétique d'ondes millimétriques se propageant du câble au connecteur de MMW exposé (40) est confiné dans le connecteur ; et

la gaine de connecteur définit des dimensions transversales qui sont agrandies par rapport à des dimensions transversales correspondantes de la gaine de câble de sorte que la partie de gaine agrandie de la gaine de connecteur définit une majorité de la superficie de la face diélectrique (45).

8. Système de communications de données selon l'une quelconque des revendications précédentes, dans lequel :

le système de communications de données comprend une pluralité de câbles flexibles de guide d'onde diélectrique (30), dont chacun comprend au moins un connecteur de MMW exposé (40) comprenant une face de connecteur diélectrique exposée ;

les connecteurs de MMW exposés (40) comprennent des parties d'accouplement complémentaires qui permettent aux câbles flexibles de guide d'onde diélectrique (30) d'être connectés l'un à l'autre en série pour définir une voie d'émission de MMW s'étendant le long des câbles flexibles de guide d'onde diélectrique (30) entre le vaisseau submersible d'attache (10) et le vaisseau submersible satellite (20) ;

les connecteurs de MMW exposés (40) comprennent chacun une face de connecteur diélectrique exposée ; et

les parties d'accouplement complémentaires des connecteurs de MMW exposés (40) sont configurées pour un support des faces de connecteur diélectrique exposées.

9. Système de communications de données selon la revendication 8, dans lequel :

les câbles flexibles de guide d'onde diélectrique (30) comprennent une âme de câble (32) **caractérisée par** une permittivité relativement élevée et une gaine de câble (34) **caractérisée par** une permittivité relativement faible de sorte qu'un rayonnement électromagnétique d'ondes millimétriques se propageant le long du câble est confiné dans le câble flexible de guide d'onde diélectrique (30) ;

les connecteurs de MMW exposés (40) comprennent chacun une face de connecteur diélectrique exposée, une âme de connecteur (42) **caractérisée par** une permittivité relativement élevée, et une gaine de connecteur (44) **caractérisée par** une permittivité relativement faible de sorte qu'un rayonnement électromagnétique d'ondes millimétriques se prolongeant du câble au connecteur est confiné dans le connecteur ; et

la gaine de connecteur (44) définit des dimensions transversales qui sont agrandies par rapport aux dimensions transversales correspondantes de la gaine de câble (34) de sorte que la partie de gaine agrandie de la gaine de connecteur (44) définit une majorité de la superficie de la face de connecteur diélectrique exposée.

10. Système de communications de données selon la revendication 8, dans lequel :

les connecteurs de MMW exposés (40) comprennent chacun une face de connecteur diélectrique exposée ; et

les parties d'accouplement complémentaires des connecteurs de MMW exposés (40) comprennent des loquets complémentaires (46) et des fentes de réception (48) configurés pour une tolérance d'enclenchement de pas moins d'approximativement 0,1 mm.

11. Système de communications de données selon la revendication 8, dans lequel :

l'un des câbles flexibles de guide d'onde diélectrique (30) comprend une paire de faces diélectriques exposées, chacune à une extrémité opposée du câble flexible de guide d'onde diélectrique (30) ; et

l'une des paires de faces diélectriques exposées est assujettie par la partie de couplage (14) du vaisseau submersible d'attache (10).

12. Système de communications de données selon l'une quelconque des revendications 1 à 7, dans lequel :

le câble flexible de guide d'onde diélectrique (30) comprend une paire de faces diélectriques exposées, chacune à une extrémité opposée du câble flexible de guide d'onde diélectrique (30) ; et

le vaisseau submersible satellite (20) comprend une enveloppe de pression transparente supplémentaire qui est configurée pour être transparente fonctionnellement à un rayonnement électromagnétique d'ondes millimétriques ; et le vaisseau submersible satellite (20) comprend en outre une partie de couplage supplémentaire configurée pour assujettir l'une des faces diélectriques exposées en une position qui permet l'émission d'un rayonnement non guidé d'ondes millimétriques à travers l'enveloppe de pression transparente supplémentaire.

13. Système de communications de données selon l'une quelconque des revendications précédentes, dans lequel la partie de couplage (14) est couplée mécaniquement à l'enveloppe de pression transparente (12), montée sur l'enveloppe de pression transparente (12), ou formée solidairement avec l'enveloppe de pression transparente (12).

14. Système de communications de données selon l'une quelconque des revendications précédentes, dans lequel le vaisseau submersible d'attache (10) comprend une coque et l'enveloppe de pression transparente (12) définit une partie du vaisseau submersible d'attache (10) qui est structurellement distincte de la coque (15).

15. Vaisseau submersible comprenant une coque (15), une enveloppe de pression transparente (12), une partie de couplage (14), et un détecteur de MMW (16), dans lequel :

l'enveloppe de pression transparente (12) définit une partie du vaisseau submersible qui est distincte structurellement de la coque (15) et est configurée pour être transparente fonctionnellement à un rayonnement électromagnétique d'ondes millimétriques ;

le détecteur de MMW (16) est positionné pour détecter un rayonnement électromagnétique d'ondes millimétriques émis à travers l'enveloppe de pression transparente (12), et la partie de couplage (14) est configurée pour assujettir une face diélectrique exposée d'un câble diélectrique en une position qui permet l'émission d'un rayonnement non guidé d'ondes millimétriques à travers l'enveloppe de pression transparente (12) au détecteur de MMW (16) au sein du vaisseau submersible.

FIG. 1

EP 2 401 825 B1

FIG. 2

EP 2 401 825 B1

40A

45

32, 42
34, 44
44

48

FIG. 3

40B

45

32, 42
34, 44
44

46

46

FIG. 4

EP 2 401 825 B1

FIG. 5

FIG. 6

EP 2 401 825 B1

**EP 2 401 825 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5377165 A
- US 20080199124 A1
- US 20090016729 A1
- US 20080023632 A